# EUROPÄISCHE PATENTSCHRIFT

(11) **EP 3 996 956 B1**
(45) Veröffentlichungstag und Bekanntmachung des Hinweises auf die Patenterteilung: **09.12.2026**
(21) Anmeldenummer: 20739917.1
(22) Anmeldetag: 07.07.2020
(51) Int. Cl.: B60R 16/023, B60S 1/56

(54) **VERFAHREN ZUM VORZEITIGEN AKTIVIEREN EINER SENSOREINHEIT EINES FAHRZEUGS VOR EINER INBETRIEBNAHME DES FAHRZEUGS, VERFAHREN ZUM AUSSENDEN EINES ANNÄHERUNGSSIGNALS BEI ANNÄHERUNG EINES MOBILEN SENDEELEMENTS AN EIN FAHRZEUG, STEUERGERÄT UND FAHRZEUG**
METHOD FOR EARLY ACTIVATION OF A SENSOR UNIT OF A VEHICLE BEFORE STARTING THE VEHICLE, METHOD FOR EMITTING A PROXIMITY SIGNAL UPON THE APPROACH OF A MOBILE TRANSMITTING ELEMENT TO A VEHICLE, CONTROL DEVICE AND VEHICLE
PROCÉDÉ PERMETTANT L'ACTIVATION ANTICIPÉE D'UNE UNITÉ DE DÉTECTION D'UN VÉHICULE AVANT UNE MISE EN MARCHE DU VÉHICULE, PROCÉDÉ PERMETTANT L'ÉMISSION D'UN SIGNAL D'APPROCHE LORSQU'UN ÉLÉMENT D'ÉMISSION MOBILE S'APPROCHE D'UN VÉHICULE, APPAREIL DE COMMANDE ET VÉHICULE

(30) Priorität: 10.07.2019 DE 102019210140
(43) Veröffentlichungstag der Anmeldung: 18.05.2022
(73) Patentinhaber: Robert Bosch GmbH, 70442 Stuttgart (DE)
(72) Erfinder: GOEDEL, Karl Christoph, 71665 Vaihingen An Der Enz (DE); GILBERGS, Holger Maris, 74372 Sersheim (DE); RICHTER, Johannes, 71636 Ludwigsburg (DE); BELL, Simon, 74372 Sersheim (DE)
(86) Internationale Anmeldenummer: PCT/EP2020/069108
(87) Internationale Veröffentlichungsnummer: WO 2021/005049

(56) Entgegenhaltungen:
- EP-A1- 3 156 291
- US-A1- 2018 050 732
- US-A1- 2018 113 331
- US-A1- 2018 272 998
- US-B1- 10 300 869

## Beschreibung

### Stand der Technik

Die Erfindung geht von einem Verfahren zum vorzeitigen Aktivieren einer Sensoreinheit eines Fahrzeugs vor einer Inbetriebnahme des Fahrzeugs, einem Verfahren zum Aussenden eines Annäherungssignals bei Annäherung eines mobilen Sendeelements an ein Fahrzeug, einem Steuergerät und einem Fahrzeug nach Gattung der unabhängigen Ansprüche aus. Gegenstand der vorliegenden Erfindung ist auch ein Computerprogramm.

Hoch- und vollautomatisierte Fahrzeuge werden zukünftig immer mehr auf den Straßen vorzufinden sein. Es existieren verschiedene Konzepte darüber, wie ein solches automatisiertes Fahrzeug realisiert werden kann. All diese Ansätze weisen dabei eine Vielzahl von Sensoren auf.

Die US 2018 0009 418 A1 beschreibt eine Reinigungseinrichtung für ein Fahrzeug, die ausgebildet ist, um bei Erkennen einer mangelnden Funktionalität eines Sensors basierend auf Verunreinigungen den Sensor zu reinigen.

Das Dokument EP 3 156291 A1 offenbart eine Komfortvorrichtung für ein Fahrzeug sowie ein Fahrzeug.

Das Dokument US 10300869 B1 offenbart einen Waschfluidtank mit magnetisch ansprechenden Sensoren.

Das Dokument US 2018/050732 A1 offenbart ein Fahrzeugradkastensystem mit beheizter Radwannenauskleidung und ein Verfahren zum Heizen einer Radwannenauskleidung.

Das Dokument US 2018/272998 A1 offenbart eine Reinigungseinrichtung für Sensoren.

Das Dokument US 2018/113331 A1 offenbart eine intelligente Sensor-Abdeckvorrichtung und ein Verfahren und Computerprogrammprodukte zum Implementieren derselben.

### Offenbarung der Erfindung

Vor diesem Hintergrund werden mit dem hier vorgestellten Ansatz ein verbessertes Verfahren zum vorzeitigen Aktivieren einer Sensoreinheit eines Fahrzeugs vor einer Inbetriebnahme des Fahrzeugs, ein verbessertes Verfahren zum Aussenden eines Annäherungssignals bei Annäherung eines mobilen Sendeelements an ein Fahrzeug, weiterhin ein verbessertes Steuergerät, das eines dieser Verfahren verwendet, ein verbessertes Fahrzeug sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen des im unabhängigen Anspruch angegebenen Steuergeräts möglich.

Durch den hier vorgestellten Ansatz wird eine Möglichkeit geschaffen, eine Anlaufzeit des Fahrzeugs mit zumindest einer Sensoreinheit zu verkürzen und dadurch einer Person eine Wartezeit zu verkürzen, bis das Fahrzeug fahrbereit ist.

Es wird ein Verfahren zum vorzeitigen Aktivieren einer Sensoreinheit eines Fahrzeugs vor einer Inbetriebnahme des Fahrzeugs vorgestellt, wobei das Verfahren einen Schritt des Einlesens und einen Schritt des Bereitstellens umfasst. Im Schritt des Einlesens wird ein Annäherungssignal eingelesen, das ein Annähern einer Person an das Fahrzeug repräsentiert. Im Schritt des Bereitstellens wird ein Aktivierungssignal an die Sensoreinheit des Fahrzeugs ansprechend auf das Annäherungssignal bereitgestellt, wobei das Aktivierungssignal eine Sensorfunktion der Sensoreinheit aktiviert, um ein vorzeitiges Aktivieren der Sensoreinheit des Fahrzeugs vor einer Inbetriebnahme des Fahrzeugs zu bewirken. Ferner wird im Schritt des Bereitstellens die Sensorfunktion als eine Heizfunktion und/oder eine Reinigungsfunktion aktiviert.

Dieses Verfahren kann beispielsweise in Software oder Hardware oder in einer Mischform aus Software und Hardware beispielsweise in einem Steuergerät implementiert sein.

Das Fahrzeug kann beispielsweise ausgeformt sein, um Personen und zusätzlich oder alternativ Gegenstände zu transportieren. Das Fahrzeug kann dabei beispielsweise als ein hochautomatisiertes oder als ein vollautomatisiertes Fahrzeug realisiert sein, das beispielsweise eine oder mehrere Sensoreinheiten aufweist. Die Sensoreinheiten können dabei als optische Sensoren, aber auch als Kontaktsensoren realisiert sein, sodass eine Fahrsicherheit gewährleistet werden kann. Durch das hier vorgestellte Verfahren wird für eine Person eine Wartezeit bei einer Inbetriebnahme des Fahrzeugs verkürzt, die das Fahrzeug zum Hochfahren oder Starten benötigt. Dazu wird das Annäherungssignal eingelesen, das beispielsweise ein zeitnahes Annähern der Person an das Fahrzeug repräsentiert. Beispielsweise kann das bedeuten, dass die Person sich innerhalb oder auch außerhalb eines Erfassungsradius um das Fahrzeug befindet. Zusätzlich oder alternativ kann dies auch bedeutet, dass die Person sich innerhalb von einer Zeitspanne an das Fahrzeug annähert. Weiterhin kann im Schritt des Bereitstellens das Aktivierungssignal bereitgestellt werden, das beispielsweise als die Sensorfunktion eine Betriebsfunktion der Sensoreinheit aktiviert. Zusätzlich oder alternativ kann durch das Aktivierungssignal ein Motor des Fahrzeugs angesteuert werden, der beispielsweise eine Fahrzeugkomponente, wie beispielsweise einen Scheibenwischer, aktiviert, und zusätzlich oder alternativ ein Fahrzeugmotor zum Antreiben des Fahrzeugs.

Ferner wird im Schritt des Bereitstellens die Sensorfunktion als eine Heizfunktion und zusätzlich oder alternativ als eine Reinigungsfunktion und zusätzlich oder alternativ eine Betriebsfunktion des Motors aktiviert werden. Das bedeutet, dass beispielsweise ein Innenraum des Fahrzeugs vorgeheizt und zusätzlich oder alternativ Scheiben des Fahrzeugs gereinigt und zusätzlich oder alternativ ein optischer Sensor des Fahrzeugs gereinigt werden können. Weiterhin kann beispielsweise die Betriebsfunktion des Motors aktiviert werden. Das bedeutet, dass Heizfunktion, Reinigungsfunktion und zusätzlich oder alternativ die Betriebsfunktion des Motors zumindest hochgefahren werden, sodass das Fahrzeug vorteilhafterweise in betriebsbereitem Zustand ist, wenn die Person in das Fahrzeug einsteigt.

Im Schritt des Bereitstellens kann als Heizfunktion ein Heizelement in einem Erfassungsbereich der Sensoreinheit aktiviert werden und zusätzlich oder alternativ kann als Reinigungsfunktion ein Scheibenwischelement und zusätzlich oder alternativ eine Sprüheinheit aktiviert werden. Das bedeutet, dass beispielsweise eine Deckscheibe vor der Sensoreinheit beheizt ist, sodass eine etwaige Eisschicht vorteilhafterweise geschmolzen und zusätzlich oder alternativ Verschmutzungen auf den Scheiben des Fahrzeugs bereits beseitigt wurden, wenn die Person einsteigt.

Gemäß einer Ausführungsform kann im Schritt des Bereitstellens als Sensorfunktion ein Aufwärmen einer Sensorsignalgebereinheit und zusätzlich oder alternativ ein Start einer Bewegung einer Komponente der Sensoreinheit aktiviert werden. Die Sensorsignalgebereinheit kann beispielsweise als eine Laserdiode realisiert sein, die vor Fahrtbeginn aufgewärmt wird, um als betriebsbereit zu gelten. Durch den hier vorgestellten Ansatz kann die Sensorsignalgebereinheit daher vorteilhafterweise erwärmt werden, bevor die Person in das Fahrzeug einsteigt, sodass auch dadurch entstehende Verzögerungen verringert werden können. Die Komponente der Sensoreinheit kann beispielsweise als ein Empfangsmodul mit einem Rotor realisiert sein, wie sie im Zusammenhang mit beispielsweise Makroscannern einsetzbar sind. Vorteilhafterweise kann auch hier eine Verzögerung bei beispielsweise einem Hochfahren des Scanners und damit die Wartezeit durch eine Beschleunigung des Rotors für die Person reduziert werden.

Weiterhin kann im Schritt des Einlesens das Annäherungssignal drahtlos über eine Schnittstelle zu einem mobilen Sendeelement eingelesen werden, insbesondere einem Schlüssel und zusätzlich oder alternativ einem Mobilfunkgerät. Das mobile Sendeelement kann beispielsweise Teil eines Autoschlüssels sein. Das Mobilfunkgerät kann beispielsweise als ein Handy oder als eine so genannte Smartwatch realisiert sein. Vorteilhafterweise ist es dadurch nicht zwangsweise notwendig, dass die Person sich innerhalb eines Radius um das Fahrzeug befindet. Der Radius kann beispielsweise eine Reichweite von 5 m bis 50 m betragen. Stattdessen kann die Person vorteilhafterweise von zu Hause aus das Fahrzeug oder die Sensoreinheit aktivieren.

Gemäß einer Ausführungsform kann im Schritt des Einlesens das Annäherungssignal eingelesen werden, das einen Kontakt eines Schlüssels in einem Zündschloss des Fahrzeugs repräsentiert. Das bedeutet, dass das Aktivieren der Sensoreinheit ab dem Moment des Öffnens des Fahrzeugs beginnt.

Im Schritt des Bereitstellens des Aktivierungssignals kann eine weitere Sensorfunktion zumindest einer weiteren Sensoreinheit und zusätzlich oder alternativ ein weiterer Motor des Fahrzeugs aktiviert werden. Das bedeutet, dass beispielsweise eine Mehrzahl von Sensoreinheiten und zusätzlich oder alternativ eine Mehrzahl von in dem Fahrzeug verbauten Motoren aktiviert werden können. Vorteilhafterweise kann auf diese Art und Weise eine vorzeitige Betriebsbereitschaft des Fahrzeugs vor einer Fahrt erreicht werden, sodass die Wartezeit für die Person weiterhin verkürzt wird.

Ferner kann im Schritt des Bereitstellens das Aktivierungssignal an die Sensoreinheit und zusätzlich oder alternativ an die zumindest eine weitere Sensoreinheit bereitgestellt werden, wobei die Sensoreinheit und zusätzlich oder alternativ die zumindest eine weitere Sensoreinheit als ein optischer Sensor ausgeformt sein kann. Das bedeutet, dass die Sensoreinheit und zusätzlich oder alternativ die weitere Sensoreinheit beispielsweise als eine Kamera oder ein Lidarsensor realisiert sein kann. Vorteilhafterweise kann dadurch beispielsweise eine Umgebung um das Fahrzeug erkannt werden, wodurch beispielsweise sicherheitsrelevante Funktionen des Fahrzeugs, wie beispielsweise ein Notbremsassistent des Fahrzeugs, aktiviert werden können.

Gemäß einer Ausführungsform kann im Schritt des Einlesens das Annäherungssignal ansprechend auf ein Annäherungserkennungssignal eingelesen werden. Das Annäherungserkennungssignal kann beispielsweise eine Statusabfrage repräsentieren, sodass ein Austausch in Form des Annäherungserkennungssignals und des Annäherungssignals entsteht. Beispielsweise kann dies als Kommunikation zwischen dem Fahrzeug und beispielsweise dem mobilen Sendeelement bezeichnet werden, sodass ein Erkennen der Annäherung aus Sicht der Person passiv erfolgen kann.

Weiterhin wird ein Verfahren zum Aussenden eines Annäherungssignals bei Annäherung eines mobilen Sendeelements an ein Fahrzeug vorgestellt, wobei das Verfahren einen Schritt des Einlesens und einen Schritt des Ausgebens umfasst. Im Schritt des Einlesens wird ein Betätigungssignal eingelesen, das ein aktives Betätigen eines Bedienelements des mobilen Sendeelements durch eine Person repräsentiert. Im Schritt des Ausgebens wird das Annäherungssignal drahtlos an ein Steuergerät des Fahrzeugs ausgegeben, um ein vorzeitiges Aktivieren einer Sensorfunktion einer Sensoreinheit des Fahrzeugs vor einer Inbetriebnahme des Fahrzeugs zu bewirken, um als eine Sensorfunktion eine Heizfunktion und/oder eine Reinigungsfunktion zu aktivieren.

Dieses Verfahren kann beispielsweise in Software oder Hardware oder in einer Mischform aus Software und Hardware beispielsweise in einem weiteren Steuergerät implementiert sein.

Der Signalgeber kann beispielsweise das zuvor erwähnte mobile Sendeelement sein, das beispielsweise als Schlüssel oder Mobilfunkgerät realisiert sein kann. Das Betätigungssignal wird beispielsweise dann ausgegeben, wenn die Person beispielsweise ein Bedienelement des mobilen Sendeelements betätigt. Das Bedienelement kann beispielsweise eine Handyapp und zusätzlich oder alternativ auch ein Knopf sein, der an dem Schlüssel angeordnet ist. Das aktive Betätigen kann dem entsprechend ein Knopfdruck sein. Vorteilhafterweise kann die Person beispielsweise von zu Hause aus das Betätigungssignal auslösen.

Der hier vorgestellte Ansatz schafft ferner ein Steuergerät, das ausgebildet ist, um die Schritte einer Variante des der hier vorgestellten Verfahrens zum vorzeitigen Aktivieren einer Sensoreinheit eines Fahrzeugs vor einer Inbetriebnahme des Fahrzeugs in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch das Steuergerät eine Steuerung eines Verfahrens zum vorzeitigen Aktivieren einer Sensoreinheit eines Fahrzeugs vor einer Inbetriebnahme des Fahrzeugs. Hierzu kann das Steuergerät beispielsweise auf Sensorsignale wie das Annäherungssignal, das ein Annähern einer Person an das Fahrzeug repräsentiert, und das Aktivierungssignal, das eine Sensorfunktion der Sensoreinheit und/oder einen Motor des Fahrzeugs aktiviert, zugreifen. Die Ansteuerung erfolgt über Aktoren wie eine Einleseeinheit, die ausgebildet ist, um ein Annäherungssignal einzulesen, und eine Bereitstelleinheit, die ausgebildet ist, um ein Aktivierungssignal bereitzustellen.

Ferner wird ein Fahrzeug mit zumindest einer Sensoreinheit, zumindest einem Motor und dem vorangehend beschriebenen Steuergerät vorgestellt. Das Fahrzeug kann beispielsweise ausgeformt sein, um Personen und zusätzlich oder alternativ Gegenstände zu transportieren.

Der hier vorgestellte Ansatz schafft ferner ein weiteres Steuergerät, das ausgebildet ist, um die Schritte des hier vorgestellten Verfahrens zum Aussenden eines Annäherungssignals bei Annäherung eines mobilen Sendeelements an ein Fahrzeug in entsprechenden Einrichtungen durchzuführen, anzusteuern bzw. umzusetzen. Auch durch diese Ausführungsvariante der Erfindung in Form eines weiteren Steuergeräts kann die der Erfindung zugrunde liegende Aufgabe schnell und effizient gelöst werden.

Hierzu kann das weitere Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

In einer vorteilhaften Ausgestaltung erfolgt durch das weitere Steuergerät eine Steuerung eines Verfahrens zum Aussenden eines Annäherungssignals bei Annäherung eines Signalgebers an ein Fahrzeug. Hierzu kann das weitere Steuergerät beispielsweise auf Sensorsignale wie ein Betätigungssignal, das ein aktives Betätigen eines Bedienelements des Signalgebers durch eine Person repräsentiert, und das Annäherungssignal zugreifen. Die Ansteuerung erfolgt über Aktoren wie eine Einleseeinheit, die ausgebildet ist, um das Betätigungssignal einzulesen, und eine Ausgabeeinheit, die ausgebildet ist, um ein Annäherungssignal auszugeben, das drahtlos an ein Steuergerät des Fahrzeugs ausgegeben wird, um ein vorzeitiges Aktivieren einer Sensoreinheit des Fahrzeugs vor einer Inbetriebnahme des Fahrzeugs zu bewirken.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einem Steuergerät ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Seitendarstellung eines Fahrzeugs mit einem Steuergerät gemäß einem Ausführungsbeispiel;
Fig. 2 eine schematische Seitendarstellung eines Fahrzeugs gemäß einem Ausführungsbeispiel;
Fig. 3 ein Ablaufdiagramm eines Verfahrens zum vorzeitigen Aktivieren einer Sensoreinheit eines Fahrzeugs vor einer Inbetriebnahme des Fahrzeugs gemäß einem Ausführungsbeispiel; und
Fig. 4 ein Ablaufdiagramm eines Verfahrens zum Aussenden eines Annäherungssignals bei Annäherung eines Signalgebers an ein Fahrzeug gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

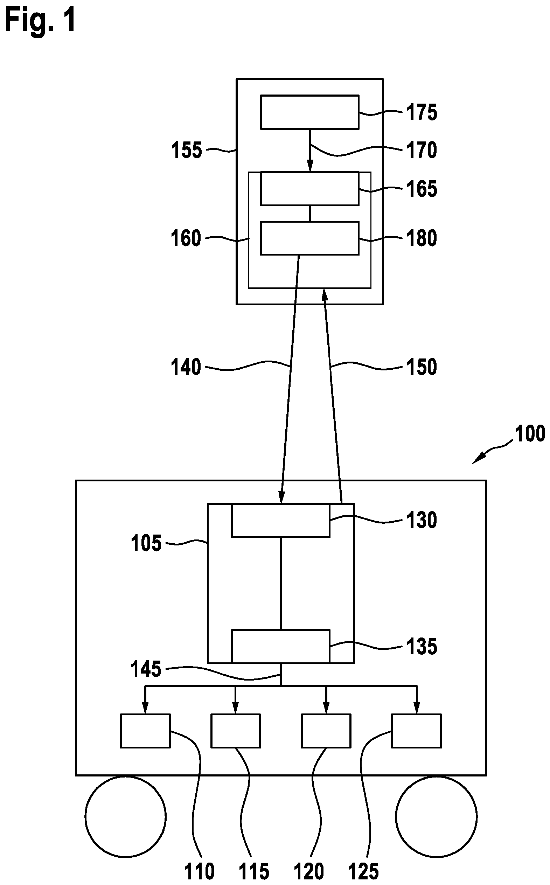

Fig. 1 zeigt eine schematische Seitendarstellung eines Fahrzeugs 100 mit einem Steuergerät 105 gemäß einem Ausführungsbeispiel. Das Fahrzeug 100 ist gemäß diesem Ausführungsbeispiel ausgeformt, um Personen und/oder Gegenstände zu transportieren. Weiterhin ist das hier dargestellte Fahrzeug 100 in Hinblick auf hochautomatisiertes und vollautomatisiertes Fahren als hochautomatisiertes und/oder vollautomatisiertes Fahrzeug 100 zu verstehen. Daraus folgt, dass das Fahrzeug 100 gemäß diesem Ausführungsbeispiel neben dem Steuergerät 105 eine Mehrzahl von Sensoren aufweist, mindestens aber eine Sensoreinheit 110 und optional zumindest eine weitere Sensoreinheit 115. Weiterhin ist zu erwarten, dass ein solches Fahrzeug 100 einen Motor 120 und optional zumindest einen weiteren Motor 125 aufweist.

Das Steuergerät 105 ist ausgebildet, um die Schritte eines Verfahrens zum vorzeitigen Aktivieren der Sensoreinheit 110 des Fahrzeugs 100 vor einer Inbetriebnahme des Fahrzeugs 100 anzusteuern oder durchzuführen. Das Steuergerät 105 weist eine Einleseeinheit 130 und eine Bereitstelleinheit 135 auf. Die Einleseeinheit 130 ist dabei ausgebildet, um ein Annäherungssignal 140 einzulesen, das ein Annähern einer Person an das Fahrzeug 100 repräsentiert. Das Annäherungssignal 140 zeigt optional einen Kontakt beispielsweise eines Schlüssels in einem Zündschloss des Fahrzeugs 100 an. Die Bereitstelleinheit 135 ist ausgebildet, um ansprechend auf das Annäherungssignal 140 ein Aktivierungssignal 145 bereitzustellen und somit zumindest eine Sensorfunktion der Sensoreinheit 110 und/oder der weiteren Sensoreinheit 115 und/oder den Motor 120 und/oder den weiteren Motor 125 zu aktivieren, um ein vorzeitiges Aktivieren der Sensoreinheit 110 des Fahrzeugs 100 vor einer Inbetriebnahme des Fahrzeugs 100 zu bewirken. Ein gemäß diesem Ausführungsbeispiel von dem Steuergerät 105 ausgehendes Annäherungserkennungssignal 150 repräsentiert eine Statusabfrage, die beispielsweise mittels des Annäherungssignals 140 beantwortet wird, wenn sich die Person gemäß diesem Ausführungsbeispiel mit einem mobilen Sendeelement 155 an das Fahrzeug 100 annähert.

Das mobile Sendeelement 155 ist dabei beispielsweise als ein Schlüssel und/oder als ein Mobilfunkgerät realisiert, wie beispielsweise als ein Handy oder Smartphone oder eine Smartwatch. Das mobile Sendeelement 155 weist dabei ein weiteres Steuergerät 160 auf, das ausgebildet ist, um die Schritte eines Verfahrens zum Aussenden des Annäherungssignals 140 bei Annäherung des mobilen Sendeelements 155 an das Fahrzeug 100 durchzuführen oder anzusteuern. Das weitere Steuergerät 160 weist gemäß diesem Ausführungsbeispiel eine Einleseeinheit 165 auf, die ausgebildet ist, um ein Betätigungssignal 170 einzulesen, das ein aktives Betätigen eines Bedienelements 175 des mobilen Sendeelements 155 durch eine Person repräsentiert. Weiterhin weist das weitere Steuergerät 160 eine Ausgabeeinheit 180 auf, die ausgebildet ist, um das Annäherungssignal 140 drahtlos an das Steuergerät 105 des Fahrzeugs 100 auszugeben, um ein vorzeitiges Aktivieren einer Sensorfunktion der Sensoreinheit 110 und/oder der weiteren Sensoreinheit 115 vor einer Inbetriebnahme des Fahrzeugs 100 zu bewirken, um als eine Sensorfunktion eine Heizfunktion und/oder eine Reinigungsfunktion zu aktivieren.

Die Sensoreinheit 110 und/oder optional die weitere Sensoreinheit 115 sind gemäß diesem Ausführungsbeispiel als optische Sensoren realisiert, wie beispielsweise Kameras oder Lidarsensoren. Der Motor 120 und optional der weitere Motor 125 sind gemäß diesem Ausführungsbeispiel jeweils als ein in dem Fahrzeug 100 verbauter Motor realisiert, der beispielsweise eine Fahrzeugkomponente bewegt. Die Fahrzeugkomponente ist dabei beispielsweise als Scheibenwischer realisiert oder aber als Fahrzeugmotor, der das Fahrzeug 100 betreibt.

In anderen Worten wird ein Ansatz vorgestellt, um ein vorzeitiges Hochfahren, Reinigen und/oder Enteisen von beispielsweise optischen Sensoren in einem Fahrzeug 100, insbesondere in hochautomatisierten Fahrzeugen und im Hinblick auf autonome Fahrzeuge, zu ermöglichen. Kurzum wird eine schnelle Verfügbarkeit der Sensoreinheiten 110, 115 erzielt, um unangenehme Wartezeiten zu Beginn der automatisierten Fahrt zu vermeiden. Das Fahrzeug 100 fährt sich, umgangssprachlich formuliert, gemäß diesem Ausführungsbeispiel selbst hoch, um eine Anlaufzeit der jeweiligen Funktionen zu verkürzen und somit ein schnelleres Losfahren zu ermöglichen, als es bisher möglich war. Sensoreinheiten 110, 115, besonders optische Sensoren, sind sehr anfällig für Sichtbeeinträchtigungen, wie beispielsweise Schnee, Eis oder Verschmutzungen, da ein Deckglas der Sensoreinheit 110, 115 beispielsweise eine sensitive Beschichtung aufweisen kann. Um beispielsweise Schäden durch Freikratzen des Deckglases vorzubeugen und zeitgleich das schnellere Losfahren zu ermöglichen, werden durch den hier vorgestellten Ansatz gemäß diesem Ausführungsbeispiel durch das Aktivierungssignal 145 ein Anlaufen, Enteisen und/oder Reinigen der Sensoreinheit 110, 115 aktiviert, bevor die Person das Fahrzeug 100 betritt. Dadurch wird gemäß diesem Ausführungsbeispiel eine Wartezeit bis zu dem Losfahren in sofern verkürzt, dass die Sensoreinheiten 110, 115 beispielsweise vor einem Starten des Fahrzeugs 100, etwa vor der Fahrt hochfahren, gereinigt und/oder enteist werden. Das Starten der Sensoreinheiten 110, 115 ist dabei gemäß diesem Ausführungsbeispiel nicht zwangsweise an das Starten des Motors 120, 125 gekoppelt, kann dies aber voraussetzen.

Gemäß diesem Ausführungsbeispiel werden die Sensoreinheiten 110, 115 und/oder die Motoren 120, 125 beispielsweise durch ein Aufschließen des Fahrzeugs 100 mit dem Schlüssel, durch Annäherung der Person an das Fahrzeug 100 mit einem entsprechend ausgerüsteten mobilen Sendeelement 155 und/oder durch aktives Betätigen eines Befehls durch die Person mit Hilfe des mobilen Sendeelements 155 aktiviert.

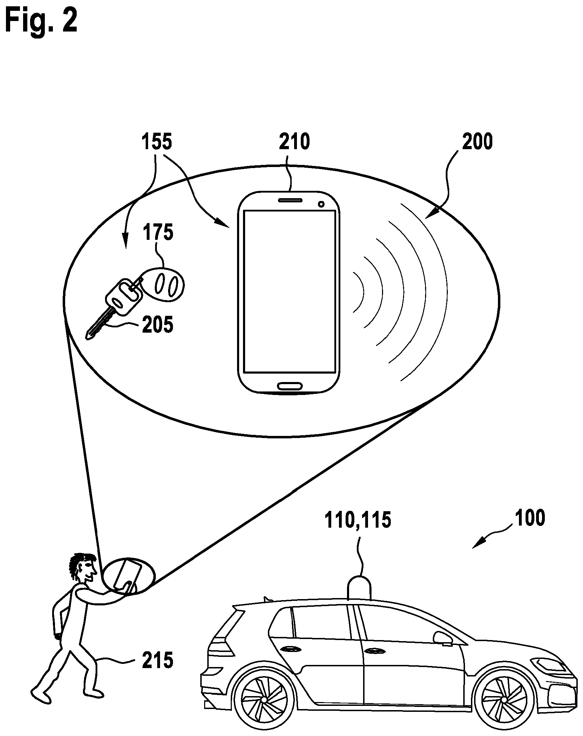

Fig. 2 zeigt eine schematische Seitendarstellung eines Fahrzeugs 100 und zumindest eines mobilen Sendeelements 155 gemäß einem Ausführungsbeispiel. Das hier dargestellte Fahrzeug 100 kann dem in Fig. 1 beschriebenen Fahrzeug 100 entsprechen. Weiterhin kann das hier dargestellte mobile Sendeelement 155 dem in Fig. 1 beschriebenen Sendeelement 155 entsprechen. Gemäß diesem Ausführungsbeispiel ist deutlich, dass das mobile Sendeelement 155 beispielsweise als Schlüssel 205 mit dem Bedienelement 175 oder als Mobilfunkgerät 210 drahtlos mit dem Fahrzeug 100 kommuniziert, das bedeutet, das Annäherungssignal als Funksignal 200 an das Fahrzeug 100 ausgibt. Gemäß einem Ausführungsbeispiel weist das Mobilfunkgerät 210 ebenfalls ein dem Bedienelement 175 funktionsähnliches Bedienelement auf, das beispielsweise über ein berührungsempfindliches Display betätigt wird. Gemäß diesem Ausführungsbeispiel kann eine Person 215 das mobile Sendeelement 155 mit sich mitführen, sodass eine Position dessen variabel ist. Gemäß diesem Ausführungsbeispiel ist die Sensoreinheit 110 und/oder die weitere Sensoreinheit 115 auf einem Dach des Fahrzeugs 100 angeordnet oder anordenbar.

In anderen Worten ist die Sensoreinheit 110, 115 beispielsweise als Lidarsensor realisiert, die beispielsweise auf so genannten Makroscannern verwendet werden. Bei diesen sind beispielsweise ein Sendemodul und/oder ein Empfangsmodul auf einem großen Rotor mit etwa 10 cm montiert, der typischerweise mit einer Frequenz von 8-22Hz, idealerweise 10-20Hz, rotiert. Ein Beschleunigen des Rotors zu seiner vollen Rotationsfrequenz kann dabei beispielsweise eine signifikante Verzögerung im Hochfahren der Sensoreinheit 110, 115 darstellen. Bei manchen Lidar-Systemen ist auch eine Temperierung einiger aktiver Komponenten notwendig, wie beispielsweise ein Aufwärmen einer Laserdiode. Vor diesem Hintergrund ermöglicht der hier vorgestellte Ansatz vorteilhafterweise ein Reduzieren der Wartezeit für die Person.

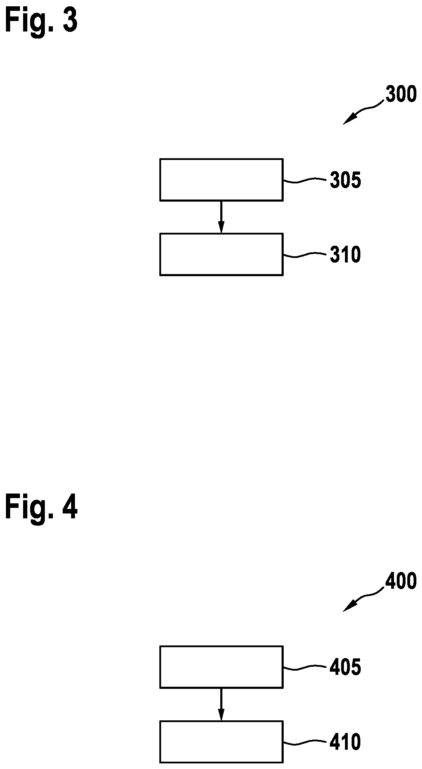

Fig. 3 zeigt ein Ablaufdiagramm eines Verfahrens 300 zum vorzeitigen Aktivieren einer Sensoreinheit eines Fahrzeugs vor einer Inbetriebnahme des Fahrzeugs gemäß einem Ausführungsbeispiel. Dieses Verfahren 300 ist von dem Steuergerät ansteuerbar oder durchführbar, wie es in Fig. 1 oder 2 beschrieben wurde. Das Verfahren 300 ist dabei in einem Fahrzeug durchführbar, wie es in Fig. 1 und 2 beschrieben wurde. Das Verfahren 300 umfasst dabei einen Schritt 305 des Einlesens eines Annäherungssignals, das ein Annähern einer Person an das Fahrzeug repräsentiert, und einen Schritt des Bereitstellens eines Aktivierungssignals an die Sensoreinheit des Fahrzeugs ansprechend auf das Annäherungssignal. Dabei aktiviert das Aktivierungssignal eine Sensorfunktion der Sensoreinheit vor einer Inbetriebnahme des Fahrzeugs.

Optional wird im Schritt 305 des Einlesens das Annäherungssignal ansprechend auf ein Annäherungserkennungssignal eingelesen. Weiterhin wird beispielsweise das Annäherungssignal drahtlos über eine Schnittstelle zu einem mobilen Sendeelement, insbesondere einem Schlüssel und/oder einem Mobilfunkgerät eingelesen. Gemäß diesem Ausführungsbeispiel wird das Annäherungssignal eingelesen, das einen Kontakt eines Schlüssels in einem Zündschloss des Fahrzeugs repräsentiert. Im Schritt 310 des Bereitstellens wird weiterhin die Sensorfunktion als eine Heizfunktion und zusätzlich oder alternativ eine Reinigungsfunktion aktiviert. Optional kann zusätzlich auch eine Betriebsfunktion des Motors aktiviert werden. Gemäß einem Ausführungsbeispiel wird im Schritt 310 des Bereitstellens als die Heizfunktion ein Heizelement in einem Erfassungsbereich der Sensoreinheit und/oder als die Reinigungsfunktion ein Scheibenwischelement und/oder eine Sprüheinheit aktiviert. Gemäß diesem Ausführungsbeispiel wird im Schritt 310 des Bereitstellens als Sensorfunktion ein Aufwärmen einer Sensorsignalgebereinheit und/oder ein Start einer Bewegung einer Komponente der Sensoreinheit aktiviert.

Fig. 4 zeigt ein Ablaufdiagramm eines Verfahrens 400 zum Aussenden eines Annäherungssignals bei Annäherung eines Signalgebers an ein Fahrzeug gemäß einem Ausführungsbeispiel. Das Verfahren 400 kann beispielsweise für ein Fahrzeug durchgeführt werden, wie es in Fig. 1 und 2 beschrieben wurde. Weiterhin ist das Verfahren 400 beispielsweise in dem weiteren Steuergerät eines mobilen Sendeelements ansteuerbar oder durchführbar und wird gemäß einem Ausführungsbeispiel beispielsweise komplementär zu dem in Fig. 3 beschriebenen Verfahren zum vorzeitigen Aktivieren einer Sensoreinheit eines Fahrzeugs durchgeführt. Das Verfahren 400 umfasst dabei einen Schritt 405 des Einlesens und einen Schritt 410 des Ausgebens. Im Schritt 405 des Einlesens wird ein Betätigungssignal eingelesen, das ein aktives Betätigen eines Bedienelements des mobilen Sendeelements durch eine Person repräsentiert. Im Schritt 410 des Ausgebens wird das Annäherungssignal drahtlos an eine Steuereinheit des Fahrzeugs ausgegeben, um ein vorzeitiges Aktivieren einer Sensorfunktion einer Sensoreinheit des Fahrzeugs vor einer Inbetriebnahme des Fahrzeugs zu bewirken, um als eine Sensorfunktion eine Heizfunktion und/oder eine Reinigungsfunktion zu aktivieren.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum vorzeitigen Aktivieren einer Sensoreinheit (110) eines Fahrzeugs (100) vor einer Inbetriebnahme des Fahrzeugs (100), wobei das Verfahren (300) die folgenden Schritte umfasst:
Einlesen (305) eines Annäherungssignals (140), das ein Annähern einer Person (215) an das Fahrzeug (100) repräsentiert; und
Bereitstellen (310) eines Aktivierungssignals (145) an die Sensoreinheit (110) des Fahrzeugs (100) ansprechend auf das Annäherungssignal (140), wobei das Aktivierungssignal (145) eine Sensorfunktion der Sensoreinheit (110) aktiviert, um ein vorzeitiges Aktivieren der Sensoreinheit (110) des Fahrzeugs (100) vor einer Inbetriebnahme des Fahrzeugs (100) zu bewirken,
**dadurch gekennzeichnet, dass**
im Schritt (310) des Bereitstellens die Sensorfunktion als eine Heizfunktion und/oder eine Reinigungsfunktion aktiviert wird.

2. Verfahren (300) gemäß Anspruch 1, wobei im Schritt (310) des Bereitstellens als Heizfunktion ein Heizelement in einem Erfassungsbereich der Sensoreinheit (110) aktiviert wird und/oder als Reinigungsfunktion ein Scheibenwischelement und/oder eine Sprüheinheit aktiviert wird.

3. Verfahren (300) gemäß einem der vorangegangenen Ansprüche, wobei im Schritt (310) des Bereitstellens als Sensorfunktion ein Aufwärmen einer Sensorsignalgebereinheit und/oder ein Start einer Bewegung einer Komponente der Sensoreinheit (110) aktiviert wird.

4. Verfahren (300) gemäß einem der vorangegangenen Ansprüche, wobei im Schritt (305) des Einlesens das Annäherungssignal (140) drahtlos über eine Schnittstelle zu einem mobilen Sendeelement (155), insbesondere einem Schlüssel (205) und/oder einem Mobilfunkgerät (210) eingelesen wird.

5. Verfahren (300) gemäß einem der vorangegangenen Ansprüche, wobei im Schritt (305) des Einlesens das Annäherungssignal (140) eingelesen wird, das einen Kontakt eines Schlüssels (205) in einem Zündschloss des Fahrzeugs (100) repräsentiert.

6. Verfahren (300) gemäß einem der vorangegangenen Ansprüche, wobei im Schritt (310) des Bereitstellens des Aktivierungssignals (145) eine weitere Sensorfunktion zumindest einer weiteren Sensoreinheit (115) und/oder ein weiterer Motor (125) des Fahrzeugs (100) aktiviert wird.

7. Verfahren (300) gemäß einem der vorangegangenen Ansprüche, wobei im Schritt (310) des Bereitstellens das Aktivierungssignal (145) an die Sensoreinheit (110) und/oder an zumindest eine weitere Sensoreinheit (115) bereitgestellt wird, wobei die Sensoreinheit (110) und/oder die zumindest eine weitere Sensoreinheit (115) als ein optischer Sensor ausgeformt ist.

8. Verfahren (300) gemäß einem der vorangegangenen Ansprüche, wobei im Schritt (305) des Einlesens das Annäherungssignal (140) ansprechend auf ein Annäherungserkennungssignal (150) eingelesen wird.

9. Verfahren (400) zum Aussenden eines Annäherungssignals (140) bei Annäherung eines mobilen Sendeelements (155) an ein Fahrzeug (155), wobei das Verfahren (400) die folgenden Schritte umfasst:
Einlesen (405) eines Betätigungssignals (170), das ein aktives Betätigen eines Bedienelements (175) des mobilen Sendeelements (155) durch eine Person (215) repräsentiert; und
Ausgeben (410) des Annäherungssignals (140) drahtlos an ein Steuergerät (105) des Fahrzeugs (100), um ein vorzeitiges Aktivieren einer Sensorfunktion einer Sensoreinheit (110, 115) des Fahrzeugs (100) vor einer Inbetriebnahme des Fahrzeugs (100) zu bewirken, um als eine Sensorfunktion eine Heizfunktion und/oder eine Reinigungsfunktion zu aktivieren.

10. Steuergerät (105), das eingerichtet ist, um die Schritte des Verfahren (300) gemäß einem der vorangegangenen Ansprüche 1 bis 8 in entsprechenden Einheiten (130, 135) auszuführen und/oder anzusteuern oder Steuergerät (160), das eingerichtet ist, um die Schritte des Verfahrens (400) gemäß Anspruch 9 in entsprechenden Einheiten (165, 180) auszuführen und/oder anzusteuern.

11. Computerprogramm, das dazu eingerichtet ist, die Schritte des Verfahrens (300) gemäß einem der vorangegangenen Ansprüche 1 bis 8 auszuführen und/oder anzusteuern oder Computerprogramm, das dazu eingerichtet ist, die Schritte des Verfahrens (400) gemäß Anspruch 9 auszuführen und/oder anzusteuern.

12. Maschinenlesbares Speichermedium, auf dem eines der Computerprogramme nach Anspruch 11 gespeichert ist.

13. Fahrzeug (100) mit zumindest einer Sensoreinheit (110, 115), zumindest einem Motor (120, 125) und einem der Steuergeräte (105) gemäß Anspruch 10.

## Claims

1. Method (300) for prematurely activating a sensor unit (110) of a vehicle (100) before the vehicle (100) is put into operation, wherein the method (300) comprises the following steps of:
reading in (305) an approach signal (140) that represents a person (215) approaching the vehicle (100); and
providing (310) the sensor unit (110) of the vehicle (100) with an activation signal (145) in response to the approach signal (140), wherein the activation signal (145) activates a sensor function of the sensor unit (110) in order to prematurely activate the sensor unit (110) of the vehicle (100) before the vehicle (100) is put into operation,
**characterized in that**
in the providing step (310), the sensor function is activated as a heating function and/or a cleaning function.

2. Method (300) according to Claim 1, wherein, in the providing step (310), a heating element in a capture region of the sensor unit (110) is activated as a heating function, and/or a windscreen wiper element and/or a spraying unit is/are activated as a cleaning function.

3. Method (300) according to one of the preceding claims, wherein, in the providing step (310), heating of a sensor signal generator unit and/or a start of a movement of a component of the sensor unit (110) is/are activated as a sensor function.

4. Method (300) according to one of the preceding claims, wherein, in the reading-in step (305), the approach signal (140) is read in wirelessly via an interface to a mobile transmission element (155), in particular a key (205) and/or a mobile radio device (210).

5. Method (300) according to one of the preceding claims, wherein, in the reading-in step (305), the approach signal (140), which represents contact of a key (205) in an ignition lock of the vehicle (100), is read in.

6. Method (300) according to one of the preceding claims, wherein, in the step (310) of providing the activation signal (145), a further sensor function of at least one further sensor unit (115) and/or a further motor (125) of the vehicle (100) is/are activated.

7. Method (300) according to one of the preceding claims, wherein, in the providing step (310), the activation signal (145) is made available to the sensor unit (110) and/or to at least one further sensor unit (115), wherein the sensor unit (110) and/or the at least one further sensor unit (115) is/are embodied as an optical sensor.

8. Method (300) according to one of the preceding claims, wherein, in the reading-in step (305), the approach signal (140) is read in in response to an approach detection signal (150).

9. Method (400) for emitting an approach signal (140) when a mobile transmission element (155) approaches a vehicle (155), wherein the method (400) comprises the following steps of:
reading in (405) an actuation signal (170) which represents active actuation of an operating element (175) of the mobile transmission element (155) by a person (215); and
outputting (410) the approach signal (140) wirelessly to a control device (105) of the vehicle (100) in order to prematurely activate a sensor function of a sensor unit (110, 115) of the vehicle (100) before the vehicle (100) is put into operation in order to activate a heating function and/or a cleaning function as a sensor function.

10. Control device (105) which is configured to carry out and/or control the steps of the method (300) according to one of the preceding Claims 1 to 8 in corresponding units (130, 135), or control device (160) which is configured to carry out and/or control the steps of the method (400) according to Claim 9 in corresponding units (165, 180).

11. Computer program which is configured to carry out and/or control the steps of the method (300) according to one of the preceding Claims 1 to 8, or computer program which is configured to carry out and/or control the steps of the method (400) according to Claim 9.

12. Machine-readable storage medium on which one of the computer programs according to Claim 11 is stored.

13. Vehicle (100) having at least one sensor unit (110, 115), at least one motor (120, 125) and one of the control devices (105) according to Claim 10.

## Revendications

1. Procédé (300) permettant l'activation anticipée d'une unité de détection (110) d'un véhicule (100) avant une mise en marche du véhicule (100), le procédé (300) comprenant les étapes suivantes :
la lecture (305) d'un signal d'approche (140) représentant l'approche d'une personne (215) vers le véhicule (100) ; et
la fourniture (310) d'un signal d'activation (145) à l'unité de détection (110) du véhicule (100) en réponse au signal d'approche (140), le signal d'activation (145) activant une fonction de détection de l'unité de détection (110) afin de provoquer une activation anticipée de l'unité de détection (110) du véhicule (100) avant une mise en marche du véhicule (100),
**caractérisé en ce que**
lors de l'étape de fourniture (310), la fonction de détection est activée en tant que fonction de chauffage et/ou de nettoyage.

2. Procédé (300) selon la revendication 1, dans lequel, lors de l'étape de fourniture (310), en tant que fonction de chauffage, un élément chauffant situé dans une zone de détection de l'unité de détection (110) est activé et/ou, en tant que fonction de nettoyage, un élément d'essuie-glace et/ou une unité de pulvérisation sont activés.

3. Procédé (300) selon l'une quelconque des revendications précédentes, dans lequel, lors de l'étape de fourniture (310), en tant que fonction de détection, un réchauffement d'une unité émettrice de signal de détection et/ou un début de déplacement d'un composant de l'unité de détection (110) sont activés.

4. Procédé (300) selon l'une quelconque des revendications précédentes, dans lequel, lors de l'étape (305) de lecture, le signal d'approche (140) est lu sans fil par l'intermédiaire d'une interface avec un élément émetteur mobile (155), notamment une clé (205) et / ou un appareil de téléphonie mobile (210).

5. Procédé (300) selon l'une quelconque des revendications précédentes, dans lequel, lors de l'étape (305) de lecture, le signal d'approche (140) est lu, celui-ci représentant un contact d'une clé (205) dans un commutateur d'allumage du véhicule (100).

6. Procédé (300) selon l'une quelconque des revendications précédentes, dans lequel, lors de l'étape de fourniture (310) du signal d'activation (145), une autre fonction de détection d'au moins une autre unité de détection (115) et/ou un autre moteur (125) du véhicule (100) sont activés.

7. Procédé (300) selon l'une quelconque des revendications précédentes, dans lequel, lors de l'étape de fourniture (310), le signal d'activation (145) est fourni à l'unité de détection (110) et/ou à au moins une autre unité de détection (115), l'unité de détection (110) et/ou ladite au moins une autre unité de détection (115) étant réalisées sous la forme d'un capteur optique.

8. Procédé (300) selon l'une quelconque des revendications précédentes, dans lequel, lors de l'étape (305) de lecture, le signal d'approche (140) est lu en réponse à un signal de détection d'approche (150).

9. Procédé (400) permettant l'émission d'un signal d'approche (140) lorsqu'un élément émetteur mobile (155) s'approche d'un véhicule (155), le procédé (400) comprenant les étapes suivantes :
la lecture (405) d'un signal d'actionnement (170), représentant un actionnement actif d'un élément de commande (175) de l'élément émetteur mobile (155) par une personne (215) ; et
la délivrance (410) sans fil du signal d'approche (140) à une unité de commande (105) du véhicule (100) afin de provoquer une activation anticipée d'une fonction de détection d'une unité de détection (110, 115) du véhicule (100) avant une mise en marche du véhicule (100), afin d'activer, en tant que fonction de détection, une fonction de chauffage et/ou une fonction de nettoyage.

10. Appareil de commande (105) qui est conçu pour exécuter et/ou commander les étapes du procédé (300) selon l'une quelconque des revendications 1 à 8 précédentes dans des unités correspondantes (130, 135), ou appareil de commande (160) qui est conçu pour exécuter et/ou commander les étapes du procédé (400) selon la revendication 9 dans des unités correspondantes (165, 180).

11. Programme informatique conçu pour exécuter et/ou commander les étapes du procédé (300) selon l'une quelconque des revendications 1 à 8 précédentes, ou programme informatique conçu pour exécuter et/ou commander les étapes du procédé (400) selon la revendication 9.

12. Support de stockage lisible par machine, sur lequel est stocké l'un des programmes informatiques selon la revendication 11.

13. Véhicule (100) comportant au moins une unité de détection (110, 115), au moins un moteur (120, 125) et l'un des appareils de commande (105) selon la revendication 10.
